(19) Europäisches Patentamt
European Patent Office
Office européen des brevets

(11) **EP 4 403 696 A1**

(12) **EUROPEAN PATENT APPLICATION**

(43) Date of publication:
**24.07.2024 Bulletin 2024/30**

(21) Application number: **23152725.0**

(22) Date of filing: **20.01.2023**

(51) International Patent Classification (IPC):
*D21H 17/36* (2006.01)   *A01G 13/02* (2006.01)
*D21H 27/10* (2006.01)   *D04H 1/26* (2012.01)
*D04H 1/425* (2012.01)   *D04H 1/435* (2012.01)
*D04H 1/64* (2012.01)    *D04H 1/645* (2012.01)
*D04H 1/732* (2012.01)

(52) Cooperative Patent Classification (CPC):
**D21H 17/36; A01G 9/0291; A01G 13/0268;
D04H 1/26; D04H 1/425; D04H 1/435; D04H 1/64;
D04H 1/645; D04H 1/732; D21H 27/10**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Ahlstrom Oyj**
**00100 Helsinki (FI)**

(72) Inventors:
• **GALLE-MICHON, Gregory**
**38360 Sassenage (FR)**
• **ALATALO, Samuel**
**71135 Lindesberg (SE)**
• **MERLET, Samuel**
**38410 Vaulnaveys-le-haut (FR)**

(74) Representative: **Laine IP Oy**
**Porkkalankatu 24**
**00180 Helsinki (FI)**

(54) **BIODEGRADABLE NONWOVEN SHEETS, A METHOD OF MANUFACTURING THE SAME AND USES THEREOF**

(57)    According to an example aspect of the present invention, there are provided nonwoven sheets that are biodegradable in soil, in particular biodegradable nonwoven sheets having longer degradation time compared to known bio-based or biodegradable cellulose containing nonwoven sheets in soil. The invention also relates to a method of manufacturing said biodegradable nonwoven sheets and to the use of the biodegradable nonwoven sheets in agricultural and food packaging applications.

Fig. 1

**Description**

FIELD

The present invention relates to biodegradable nonwoven sheets in soil, in particular to biodegradable nonwoven sheets having a longer degradation time compared to known bio-based or biodegradable cellulose containing nonwoven sheets in soil. The invention also relates to a method of manufacturing said biodegradable nonwoven sheets and to the use of the biodegradable nonwoven sheets in agricultural and food packaging applications.

BACKGROUND

There is an increasing demand for biodegradable nonwovens for use in several agricultural applications, including plant pots and other applications wherein biodegradable nonwovens could be used, such as mulch coverings. Non-biodegradable nonwovens for agricultural applications are available, such nonwovens typically being based on blends of wood pulp fibers with synthetic fibers, bonded with a synthetic binder. A drawback with the currently used nonwovens is the presence of non-biodegradable materials (synthetic fibers and binders) left in the soil and generating pollution in the soil due to the non-biodegradable materials.

Some biodegradable nonwovens have been developed. WO 2005042631 A2 discloses a preparation method of water-dispersible products that contain a regenerated cellulose layer, a second sheet made up of natural fibers and polyvinyl alcohol as binder. CN 10346801 B2 relates to preparation of degradable large-scale flowerpots and nursery stock transplants basin. The basin preparation includes a mixture of e.g. crop straw, rice bran, tapioca flour or bamboo-carbon fibre and polyvinyl alcohol, combined with cellulose acetate and starch.

However, the prior solutions are known to suffer from several shortcomings. Specifically, a biodegradable but water-dispersible nonwoven not only provides insufficient degradation time but makes the nonwoven sheet and the products made therefrom difficult to handle in agricultural conditions. Even if not water-dispersible, some of the other currently known biodegradable nonwovens based on cellulosic fibers and biobinders provide insufficient degradation times (such as less than 30 days), making the nonwovens dissatisfactory for use e.g. as propagation pots. Additionally, the known biodegradable nonwovens often suffer from issues related to insufficient wet tensile strength and insufficient water resistance which properties are required for a use in the agricultural field, such as propagation pots.

Therefore, there exists a need for an improved biodegradable nonwoven sheet, which has sufficient degradation time and wet tensile strength, while also providing low moisture retention properties, better hydrophobicity, as well as sufficient tear strength and stiffness.

SUMMARY OF THE INVENTION

The invention is defined by the features of the independent claims. Some specific embodiments are defined in the dependent claims.

The present invention is based on the concept of using a biodegradable binder in a nonwoven sheet comprising biodegradable fibers, such as wood pulp fibers or man-made fibers, to provide a biodegradable nonwoven sheet for use in applications, wherein good wet tensile strength, water resistance and sufficiently long degradation times are desired. Such applications include for example agricultural applications, such as plant pots or mulch coverings, and food packaging applications. The biodegradable binder comprises at least one long chain polymer (homopolymer or copolymer) containing monomer units of vinyl alcohol having a high degree of hydrolysis. More particularly, the biodegradable binder comprises at least one co-polymer containing monomer units of vinyl alcohol having a molecular weight of at least 20,000 g/mol and a degree of hydrolysis of at least 80 mol%.

According to a first aspect of the present invention, there is thus provided a biodegradable nonwoven sheet comprising a fiber blend comprising biodegradable fibers and a binder comprising at least one co-polymer containing monomer units of vinyl alcohol, said co-polymer having a molecular weight of at least 20,000 g/mol and a degree of hydrolysis of at least 80 mol%.

According to a second aspect of the present invention, there is provided a method of manufacturing a biodegradable nonwoven sheet as defined above, comprising the steps of

- preparing a fiber blend suspension in water comprising biodegradable fibers;
- disposing the fiber blend suspension on a forming wire of a paper or wetlaid machine;
- drying the blend of fiber suspension to form a fiber sheet;
- applying a binder to the fiber sheet; and
- drying and curing the fiber sheet comprising the binder to form the biodegradable nonwoven sheet;

wherein the fiber sheet comprising the binder is cured at a temperature of at least 120 °C.

A further aspect of the invention relates to the use of the nonwoven sheet in agricultural applications, such as in plant pot or in mulch covering applications. A still further aspect of the invention relates to the use of the nonwoven sheet in food packaging applications.

Considerable advantages are obtained by the invention. First, the biodegradable nonwoven sheet as defined herein, comprising at least one co-polymer containing monomer units of vinyl alcohol as a binder instead of known and available bio-based binders achieves longer degradation times than previous bio-based solutions, while being fully biodegradable.

Further, the binder comprising at least one co-polymer containing monomer units of vinyl alcohol provides a good wet tensile strength to the biodegradable nonwoven, while also providing the necessary mechanical resistance (sufficient stiffness, dry tensile strength and tear strength) for manufacturing of various products from the nonwoven.

Further features and advantages of the present technology will appear from the following description of some embodiments.

BRIEF DESCRIPTION OF THE DRAWINGS

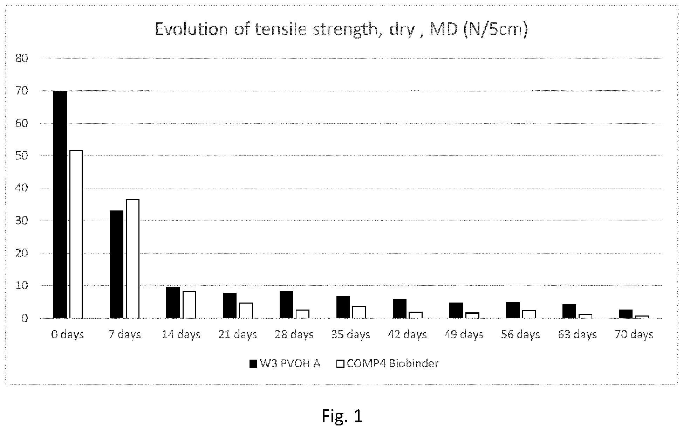

FIGURE 1 illustrates a comparison of evolution of dry tensile strength (MD, N/m) of nonwovens comprising a biobased binder (COMP4) or a polyvinyl alcohol having a molecular weight of 100,000 g/mol and a degree of hydrolysis of 99% (W3 PVOH A) as a function of degradation time in soil.

EMBODIMENTS

DEFINITIONS

As used herein and in the accompanying claims, the terms below are intended to have the following definitions:

"Fiber" is a fibrous or filamentary structure having a high aspect ratio of length to diameter. The terms "nonwoven" or "web" refer to a collection of fibers in a mass of such fibers, which are randomly interlocked, entangled and/or bound to one another so as to form a structural element.

As used herein, the terms "synthetic fiber" and/or "man-made fiber" refer to fibers made from fiber-forming substances including polymers synthesized from chemical compounds and modified or transformed natural polymers. Within the present context, "man-made fibers" typically comprise fibers also known as man-made cellulosic fibers or regenerated cellulose fibers, such as cellulose acetate fibers, Lyocell fibers, viscose fibers and rayon fibers, other biodegradable man-made fibers, such as polylactic acid fibers, polybutylene succinate, polyhydroxyalcanoate, other biodegradable polyesters, and combinations thereof. The synthetic fibers and/or man-made fibers typically have a length comprised between 0.5 mm and 35 mm, preferably of less than 20mm. The synthetic fibers and/or man-made fibers further have a linear mass of 0.1 to 17 decitex (Dtex), preferably of 0.5 to 5 Dtex.

As used herein and in the claims, biodegradable fibers comprise wood pulp fibers such as hardwood fibers and softwood fibers and combinations thereof. The hardwood fibers and softwood fibers may include unbleached and bleached pulp fibers, for example northern bleached softwood kraft (NBSK) fibers, southern bleached softwood kraft (SBSK) fibers, or hardwood pulp, such as Eucalyptus pulp. Preferred wood pulp fibers include but are not limited to softwood pulp fibers, a combination of softwood pulp fibers and hardwood fibers; bleached or unbleached mechanical pulp, recycled pulps, and blends thereof

As used herein and in the claims, biodegradable fibers comprise wood pulp fibers, man-made fibers (as defined here-above), shredded wood, shredded paper (tissue, newsprint and the like), straw, cotton fiber, composted vegetation, fibrous sphagnum moss, peat moss, shredded stalks including shredded corn stalks and shredded pine straw, flax fibers, sisal fibers, bamboo fibers, and mixtures thereof.

As used herein and in the claims, "biodegradable" means that the referred substance or object is capable of being decomposed by bacteria or other living organisms and thereby avoids pollution.

Within the present context, the term "curing" refers to a process where the polymeric material in the fiber sheet toughens or hardens or crystallizes to obtain the nonwoven sheet. Within this disclosure, curing is typically accomplished by heat.

DETAILED DESCRIPTION

It has been found that co-polymers containing monomer units of vinyl alcohol in biodegradable nonwoven sheets may increase the degradation time of biodegradable nonwoven sheets in contact with soil. More particularly, long chain co-polymers containing monomer units of vinyl alcohols having a high degree of hydrolysis when present in biodegradable nonwoven sheets cured at high temperatures increase the degradation time of the biodegradable nonwoven sheets in soil.

The biodegradable nonwoven sheet includes a fiber blend, comprising biodegradable fibers, and a binder comprising at least one co-polymer containing monomer units of vinyl alcohol. The co-polymer containing monomer units of vinyl alcohol has a molecular weight of at least 20,000 g/mol and a degree of hydrolysis of at least 80 mol%

Co-polymers containing monomer units of vinyl alcohol

Co-polymers containing monomer units of vinyl alcohol are typically produced by hydrolysing poly(vinyl acetate). The physical characteristics of co-polymers containing monomer units of vinyl alcohol depend *e.g.* on the chain length of the polymer (molecular weight or the degree of polymerization) and on the degree of hydrolysis.

The employed co-polymers containing monomer units of vinyl alcohol have a molecular weight of at least 20,000 g/mol and a degree of hydrolysis of at least 80 mol%.

The co-polymer containing monomer units of vinyl alcohol may have a molecular weight of 20,000 g/mol to 200,000 g/mol, preferably of 24,000 g/mol to 110,000 g/mol.

The co-polymer containing monomer units of vinyl alcohol may have a viscosity of 4 mPa.s to 30 mPa.s, preferably of 5 mPa.s to 20 mPa.s.

The co-polymer containing monomer units of vinyl alcohol may have a degree of hydrolysis of at least 90 mol%, preferably of at least 95 mol%, or at least 99%.

The biodegradable binder may comprise at least one co-polymer containing monomer units of vinyl alcohol, said biodegradable binder having an enthalpy of at least 3 J/g, preferably comprised between 8 J/g and 20J/g, as measured based on the DSC measurement of the biodegradable nonwoven sheet. The enthalpy of the biodegradable binder is linked to the degree of crystallinity of the co-polymer containing monomer units of vinyl alcohol. The degree of crystallinity enables an increase of the degradation time of the biodegradable nonwoven sheet in the soil.

The at least one co-polymer containing monomer units of vinyl alcohol may be polyvinyl alcohol. The at least one co-polymer containing monomer units of vinyl alcohol may be polyethylene vinyl alcohol copolymer.

The binder is present in the biodegradable nonwoven sheet at a level of at least 5 wt%, preferably at least 6 wt%, more preferably at least 8 wt%, based on the total weight of the nonwoven sheet; and/or at a level of 35 wt% or less, preferably at a level of 30 wt% or less, more preferably at a level or 25 wt% or less, based on the total weight of the nonwoven sheet. If the binder is present in the biodegradable nonwoven sheet in an amount of less than 5 wt%, the degradation time in the soil are too quick and the biodegradable nonwoven sheet will not present the mechanical properties, such as the wet tensile strength, required at the conversion stage of this biodegradable nonwoven sheet.

In one or several embodiments, the biodegradable nonwoven sheet comprises the binder impregnated in the biodegradable nonwoven sheet, preferably throughout the full thickness of the sheet. This enables to have good cohesion between the fibers in the full thickness of the paper and also enables an improvement of the mechanical properties of the final nonwoven sheet.

The fiber blend comprising biodegradable fibers may be present in the biodegradable nonwoven sheet at a level of at least 65 wt%, preferably at least 70 wt%, more preferably at least 75 wt%, based on the total weight of the nonwoven sheet; and/or at a level of 95 wt% or less, preferably 94 wt% or less, more preferably 92 wt% or less, based on the total weight of the nonwoven sheet.

Biodegradable fibers

The biodegradable nonwoven sheet of the embodiments disclosed herein comprises biodegradable fibers. The biodegradable fibers may comprise wood pulp fibers. Wood pulp fibers comprise hardwood fibers and softwood fibers and combinations thereof. The hardwood fibers and softwood fibers may include unbleached and bleached pulp fibers, for example northern bleached softwood kraft (NBSK) fibers, southern bleached softwood kraft (SBSK) fibers, or hardwood pulp, such as Eucalyptus pulp. Preferred wood pulp fibers include but are not limited to softwood pulp fibers, a combination of softwood pulp fibers and hardwood fibers; bleached or unbleached mechanical pulp, recycled pulps, and blends thereof.

Wood pulp fibers may be present in the fiber blend at a level of at least 55 wt%, preferably at least 60 wt%, more preferably at least 65 wt%, based on the total weight of the fibers in the fiber blend; and/or at a level of 90 wt% or less, preferably at a level of 85 wt% or less, more preferably at a level of 80 wt% or less, based on the total weight of the fibers in the fiber blend.

In some embodiments, wood pulp fibers may be present in the fiber blend in an amount of about 60-85 wt%.

Thus the fiber blend may comprise at least wood pulp fibers. In some embodiments, the rest of the fibers in the fiber blend may be composed of man-made fibers.

The biodegradable fibers may comprise man-made fibers. The man-made fibers comprise cellulosic man-made fibers or regenerated cellulosic fibers and/or other biodegradable man-made fibers. According to some embodiments, the biodegradable fibers forming the biodegradable nonwoven sheet may contain only man-made fibers. According to other embodiments, the biodegradable fibers forming the biodegradable nonwoven sheet may contain man-made fibers in addition to wood pulp fibers. Exemplary man-made fibers that may be employed include man-made cellulosic fibers or regenerated cellulosic fibers, such as cellulose acetate fibers, Lyocell fibers, viscose fibers and rayon fibers, and other biodegradable man-made fibers, such as polylactic acid fibers, polybutylene succinate, polyhydroxyalcanoate, other biodegradable polyesters, and combinations thereof.

If combined with wood pulp fibers, man-made fibers will typically be present in the biodegradable nonwoven sheet in an amount of less than 50%, preferably less than 40%, more preferably less than 30%, based on the total content of fibers. In some exemplary embodiments, the fiber blend may comprise 60-85 wt%, preferably 65-80 wt% of wood pulp fibers and 15-40 wt%, preferably 20-35 wt% of man-made fibers as herein defined, based on the total weight of the fibers in the fiber blend.

In one or several embodiments, the biodegradable nonwoven sheet may comprise regenerated cellulosic fibers, preferably Lyocell fibers and/or viscose fibers.

The man-made fibers typically have a length comprised between 0.5 mm and 35 mm, preferably of less than 20mm. The man-made fibers further have a linear mass of 0.1 to 17 decitex (Dtex), preferably of 0.5 to 5 Dtex.

Optional other fibrous components

Examples of optional other fibrous components that may be included in the biodegradable nonwoven sheet include mineral fibers such as glass fibers, carbon fibers, basalt fibers, non-biodegradable synthetic fibers such as polyethylene terephthalate or polyamide. The optional other fibrous component can be present in the biodegradable nonwoven sheet in an amount of up to 10% based on the total amount of fibers, preferably the optional other fibrous component do not represent more than 5 wt% of the biodegradable nonwoven sheet.

Optional components

The biodegradable nonwoven sheet may comprise additives conventionally employed in nonwovens as long as they are biodegradable. Examples of such optional components may include wet strength additives, fiber retention agents, and the like. If present, these additives may be included in amounts of less than 10 wt%, preferably less than 5 wt%, based on total weight of the biodegradable nonwoven sheet.

The biodegradable nonwoven sheet may also comprise other biodegradable binders in addition to the at least one co-polymer containing monomer units of vinyl alcohol. Exemplary biodegradable binders comprise polydioxanone, polycaprolactone, aqueous emulsion of modified biopolymers and natural plant compounds, and any combinations thereof.

Method of manufacturing

A biodegradable nonwoven sheet comprising the blend of fibers, as described here-above, may be produced by a conventional wet-laid process, carried out continuously or batchwise. Thus, water may be added to the blend of fibers in order to form a suspension of fibers, which is then disposed on a wire of a paper or wetlaid machine to form a fibrous web, which is dewatered and dried to obtain the fiber sheet. A binder, as defined here-above, is applied to the fiber sheet and a heat-treatment, in particular a drying and a further curing steps, is then applied to form the biodegradable nonwoven sheet.

The binder is applied to the fiber sheet preferably by impregnating the fiber sheet with the binder. Preferably, the binder is impregnated throughout the full thickness of the fiber sheet. Impregnation may be performed for example by size-press or spray-coating. Impregnation of the fiber sheet further improves mechanical resistance of the resulting nonwoven sheet.

Thus the invention also relates to a method of manufacturing a biodegradable nonwoven sheet as defined herein, the method comprising:

- preparing a fiber blend suspension in water comprising biodegradable fibers;
- disposing the fiber blend suspension on a forming wire of a paper or wetlaid machine;
- drying the suspension of fibers to form a fiber sheet;
- applying a binder to the fiber sheet; and
- drying and curing the fiber sheet comprising the binder to form the biodegradable nonwoven sheet.

Typically the fiber sheet comprising the binder is dried at a temperature of at least 100°C and further cured at a temperature of at least 120 °C to form the biodegradable nonwoven sheet. The temperatures reported correspond to the maximal temperature of the biodegradable nonwoven sheet at the exit of an oven used for curing the binder. Typically, this maximal temperature is measured with an infra-red thermometer disposed just after the oven used for curing the binder. Without wishing to be bound by theory, curing the binder at a temperature of at least 120 °C increases crystallinity of the at least one co-polymer comprising monomer units of vinyl alcohol. The increase of the crystallinity of this co-polymer enables an increase of the degradation time of the biodegradable nonwoven sheet in the soil. As indicated previously, the increase of the degree of crystallinity of the at least one co-polymer comprising monomer units of vinyl alcohol is determined with the enthalpy of this co-polymer.

In one or several embodiments, the fiber sheet comprising the biodegradable binder is cured at a temperature comprised between 120°C and 210°C, these temperatures corresponding to the temperature of the biodegradable nonwoven sheet at the exit of the oven used for curing the binder.

Samples produced at the lab scale and impregnated with the binder have been dried at 130°C during 5 minutes and then cured at a temperature of at least 135°C during 5 minutes and samples produced industrially on a paper machine and impregnated with the binder have been dried at least at 100°C during approximately 10 seconds and further cured at temperature of at least 120°C during approximately 6 seconds. For the samples produced on the paper machine, these ones have been cured online on this paper machine running at a speed of 100 m/min to 500 m/min.

Properties of the nonwoven

The resulting nonwoven sheet will exhibit wet tensile strength in Machine Direction (MD) of at least 55 N/m, preferably of at least 100 N/m, more preferably of 150 N/m to 700 N/m; or a wet tensile in Cross Direction (CD) of at least 35 N/m, preferably of at least 55 N/m, more preferably of 110 N/m to 400 N/m. Such wet tensile strength in MD and/or CD enable the manipulation of the plant pots in a wet state. Without wishing to be bound by theory, such values for the wet tensile strength in MD and/or CD are also linked to the biodegradation properties of the biodegradable nonwoven sheet, and more particularly the higher the wet tensile strength in MD and/or CD is, the more resistant to biodegradation in soil the biodegradable nonwoven sheet is. Accordingly, these values for wet tensile strength in MD and/or CD offer a good compromise related to the formation of a propagation pot, growing of a plant in this propagation pot and handling of this pot, and degradation time of the pot in the soil once planted.

The biodegradable nonwoven sheet may have a grammage of 15 to 60 $g/m^2$, preferably of 17 to 40 $g/m^2$.

The biodegradable nonwoven sheet may have air permeability of at least 75 $l/m^2.s$, preferably of 100 to 5000 $l/m^2.s$. An air permeability of at least 75 $l/m^2.s$, and preferably of at least 100 $l/m^2.s$, enables the biodegradable nonwoven sheet to provide the propagation pot with a sufficient breathability to enable the growth of a plant disposed in this propagation pot. Furthermore, an air permeability of more than 5000 $l/m^2.s$ may lead to a too open structure and the retention of the growth medium used to fill the propagation pot might not be ensured. Therefore, in one embodiment the biodegradable nonwoven sheet has an air permeability of from at least 75 $l/m^2.s$, preferably from at least 100 $l/m^2.s$ to no more than 5000 $l/m^2.s$.

The resulting biodegradable nonwoven sheet will typically exhibit a degradation time of at least 30 days, preferably at least 40 days, in soil. The nonwoven sheet is considered biodegraded when it exhibits a dry tensile strength of less than 4 N/50 mm, when measured according to the degradation test disclosed in the Experimental section (dry tensile strength as a function of degradation time).

Due to the advantageous properties of the biodegradable nonwoven sheet, such as long degradation time in soil, good wet and dry tensile strength, air permeability and water resistance, the biodegradable nonwoven sheet disclosed herein may be employed for forming biodegradable plant pots, such as propagation pots for flowers and trees, as well as for forming mulch covers. The biodegradable nonwoven sheet may also be employed in food packaging applications.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

EXPERIMENTAL

**Test methods**

The following test methods were employed to obtain the data reported in the Tables below.

Basis Weight: The basis weight is measured according to TAPPI Standard T410 and reported in grams per square meter (g/m$^2$).

Air Permeability: The air permeability is measured according to ISO Standard 9237 at 196 Pa and reported in liter per square meter and second (l/m$^2$.s).

Thickness at 100 kPa: The thickness at 100 kPa is measured according to ISO Standard 534:1988 and reported in micrometers ($\mu$m).

Dry tensile strength: The tensile strength was measured according to TAPPI Standard T494 om-96 with the following modifications: 50 mm strips were used, the initial jaw distance was 127 mm, and the break force value was recorded as the maximum of the recorded force curve instead of 25 mm strip and reported in Newtons per meter (N/m). The dry tensile strenght is measured both in Machine Direction (MD) and Cross Direction (CD). The arithmetic average of machine direction and cross direction is also given.

Elongation: The elongation was measured according to TAPPI Standard T494 and reported as a percentage (%). The elongation is measured both in MD and CD.

Wet tensile strength: The wet tensile strength was measured according to TAPPI T494 om-96 as described here-above for the dry tensile. The further modification is that the measure is performed after an immersion of 10 minutes under 2 cm water at 23°C. The wet tensile strength is measured both in MD and CD.

Water drop: The water drop is an internal method and corresponds to the time of absorption of a water drop deposited on the surface of the nonwoven. The deposition of the drop is performed with a dropper and falls from a height of 70 mm +/- 5. This time of absorption is reported in seconds.

Tear: The tear resistance is measured according to ISO 9073-4 standard and reported in cN. The tear resistance is measured both in MD and CD.

Enthalpy: The enthalpy of the binder comprising at least one co-polymer containing monomer units of vinyl alcohol is measured based on the Differential Scanning Calorimetry (DSC) of the biodegradable nonwoven sheet by using a Metier Toledo DSC 1. The enthalpy of a sample is measured by heating said sample is heating from 0°C to 240°C at a speed of 10 K/min under a flow of nitrogen at 60 mL/min.

Degree of hydrolysis: The degree of hydrolysis of the polymer is determined by $^1$H and/or $^{13}$C NMR.

Viscosity: The viscosity of the co-polymer comprising monomer units of vinyl alcohol is measured for an aqueous solution of said co-polymer comprising monomer units of vinyl alcohol at a concentration of 4% by weight and at 20°C according to DIN 53015 standard.

Dry tensile strength as a function of degradation time (described here-below):

Test setup: The sheet of the nonwoven to be tested is cut into smaller sheets (105 mm x 50 mm) and folded into a cylinder, sealed with tape. The cylinder has a diameter of approximately 30 mm and a height of approximately 50 mm. It is filled with a peat substrate as used by many growers and irrigated. The pots are placed in a tray under plastic cover to lower evaporation.

Sampling: Every 7th day two or more ports are lifted out of the tray. The nonwoven is removed carefully without damaging the material. The nonwoven is dried for a minimum of 24 hours at a temperature of approximately 20°C. The nonwoven is 50 mm wide and the length is cut in both ends to make an easy fit to the grippers in the tensiometer.

Measuring: The nonwoven is placed in the two grippers and the lever is moved until the nonwoven breaks. The tensiometer is set to measure peak strength in Newton. Measured values are noted and registered in a spreadsheet. Most of the sample tests were based on 28 pots which provide measurement period of 14 weeks. Some samples were measured every two weeks providing a longer period of measurement.

In the examples here-after, the following co-polymers comprising monomer units of vinyl alcohol have been used:

**Table 1.**

| Co-polymer | Molecular weight (g/mol) | Viscosity (mPa.s) | Degree of hydrolysis (mol %) |
|---|---|---|---|
| PVOH A | 100,000 | 15 | 99 |
| PVOH B | 24,000 | 4 | 98 |
| PVOH C | 40,000 | 5 | 74 |
| PVOH D | 100,000 | 14 | 99 |

The co-polymer comprising monomer units of vinyl alcohol PVOH A to C are polyvinyl alcohols and PVOH D is a polyethylene vinyl alcohol.

### Example 1. Comparison of the binder of the invention and a known biobinder

This example 1 corresponds to a lab scale trial. The following experiment was performed to evaluate effects of a binder according to the present invention compared to a known biobinder. The binder comprising at least one co-polymer containing monomer units of vinyl alcohol used for this example is PVOH A. Moreover, the known biobinder used for this example is composed of an aqueous formulation of modified biopolymers and natural plant compounds, such as for example the Lotus grade from Organoclick. Wetlaid fibrous composition sheets manufactured on an inclined wire wetlaid machine (Voith headbox) were impregnated with a laboratory size-press (Mathis HVF 350 mm) at 3.1 m/min roll speed and 1.8b roll pressure with an aqueous polymer binder formulation, dried on a contact hot dryer at 130°C for 5 minutes followed by 5 minutes curing in oven at 135°C. The reported temperature corresponds to the temperature of the nonwoven sheet in the oven. The compositions of the nonwovens are shown in Table 2. The physical characteristics of the nonwovens are given in Table 3.

**Table 2.** Composition of the sheets (%wt)

| | W1 | COMP1 |
|---|---|---|
| **Type** | | |
| woodpulp softwood NBSK | 54.2 | 54.2 |
| woodpulp eucalyptus | 15.2 | 15.2 |
| PET fiber | 15.2 | 15.2 |
| wet strength agent | 0.4 | 0.4 |
| Biobinder | | 15 |
| PVOH A | 15 | |

**Table 3.** Physical characteristics of the nonwovens of Example 1

| | | W1 | COMP1 |
|---|---|---|---|
| Basis weight | g/m2 | 25.8 | 25.9 |

(continued)

|  |  | W1 | COMP1 |
|---|---|---|---|
| Thickness | micron | 116 | 94 |
| Air permeability | L/m²/s | 1553 | 1465 |
|  |  |  |  |
| Dry tensile MD | N/m | 1303 | 799 |
| Dry tensile CD | N/m | 821 | 439 |
| CD/MD ratio | % | 63,0 | 55,0 |
| Average tensile | N/m | 1062 | 619 |
|  |  |  |  |
| Elongation MD | % | 3.0 | 4.0 |
| Elongation CD | % | 5.1 | 5.5 |
| Average elongation | % | 4.1 | 4.7 |
|  |  |  |  |
| Wet tensile MD | N/m | 235 | 285 |
| Wet tensile CD | N/m | 153 | 168 |
| Wet/Dry ratio | % | 18,2 | 36,6 |
| Average wet tensile | N/m | 194 | 226 |
|  |  |  |  |
| Water drop | s | 13 | 999 |
|  |  |  |  |
| Tear MD | cN | 221 | 109 |
| Tear CD | cN | 328 | 122 |
| Average Tear | cN | 274.5 | 115.5 |

**Table 4.** Evolution of tensile strength (N/50 mm) as a function of degradation time related to the protocol described here-above.

|  | W1 | COMP1 |
|---|---|---|
| 0 days | 72.9 | 47.7 |
| 5 days | 64.75 | 34.63 |
| 12 days | 25.75 | 7.5 |
| 19 days | 18.35 | 7.13 |
| 26 days | 14.65 | 7.18 |
| 33 days | 16.28 | 5.78 |
| 40 days | 8.48 | 1.33 |
| 47 days | 9.05 | 1.775 |
| 54 days | 9 | 1.3 |
| 61 days | 7.425 | 1.575 |
| 68 days | 7.925 | 1.625 |

Table 4 above shows evolution of tensile strength of the nonwovens sheet of Table 2 as a function of time. The results show that the performance of the PVOH A binder is better than the known biobinder. It can also be seen from Table 4 that after 40 days, the nonwoven sheet containing the biobinder (COMP1) has been fully biodegraded contrary to the nonwoven according to the inventive example (W1).

**Example 2. Combination of the binder of the invention and a known bio-based binder.**

This example is also a lab scale trial aimed at exploring the effect of a combination of the binder of the invention and a known bio-based binder when compared to the known biobinder alone and to a synthetic binder. The binder comprising at least one co-polymer containing monomer units of vinyl alcohol used for this example is PVOH A. Moreover, the known biobinder used for this example is composed of an aqueous formulation of modified biopolymers and natural plant compounds, such as for example the Lotus grade from Organoclick. Wetlaid fibrous composition sheets manufactured on an inclined wire wetlaid machine (Voith headbox) were impregnated with a laboratory size-press (Mathis HVF 350 mm) at 3.1 m/min roll speed and 1.8b roll pressure with an aqueous polymer binder formulation, dried on a contact hot dryer at 130°C for 5 minutes followed by 5 minutes curing in oven at 135°C. The reported temperature corresponds to the temperature of the nonwoven sheet in the oven. The compositions of the nonwovens are shown in Table 5. The physical characteristics of the nonwovens are given in Table 6.

**Table 5.** Composition of the nonwoven sheets (%wt)

|  | COMP2 | COMP3 | W2 |
|---|---|---|---|
| *Type* |  |  |  |
| woodpulp softwood NBSK | 54.2 | 54.2 | 54.2 |
| woodpulp eucalyptus | 15.2 | 15.2 | 15.2 |
| PLA fibers (12 mm; 2.2 Dtex) | 15.2 | 15.2 | 15.2 |
| wet strength agent | 0.4 | 0.4 | 0.4 |
| Styrene butadiene binder (Tg: +18°C) | 15 |  |  |
| biobinder |  | 15 | 6 |
| PVOH A |  |  | 9 |

Wetlaid fibrous composition sheet were impregnated with a laboratory size-press as presented in example 1, dried on a contact hot dryer at 130°C and cured in an oven during 5 minutes at 135°C. This temperature corresponds to the temperature of the nonwoven sheet in the oven. The physical characteristics of the obtained nonwoven sheets are given in Table 6.

**Table 6.** Physical characteristics of the nonwovens of Example 2

|  |  | COMP2 | COMP3 | W2 |
|---|---|---|---|---|
| Basis weight | g/m2 | 25.8 | 25.7 | 25 |
| Thickness | micron | 112 | 115 | 120 |
| Air permeability | L/m$^2$/s | 1680 | 1662,5 | 1170 |
|  |  |  |  |  |
| Dry tensile MD | N/m | 1151 | 726 | 1290 |
| Dry tensile CD | N/m | 752 | 395 | 804 |
| CD/MD ratio | % | 65 | 54 | 62 |
| Average tensile | N/m | 951 | 560 | 1047 |
|  |  |  |  |  |
| Elongation MD | % | 5.2 | 4.0 | 3.8 |
| Elongation CD | % | 7.8 | 7.0 | 6.0 |

(continued)

|  | | COMP2 | COMP3 | W2 |
|---|---|---|---|---|
| Average elongation | % | 6.5 | 5.5 | 4.9 |
|  | | | | |
| Wet tensile MD | N/m | 653 | 271 | 417 |
| Wet tensile CD | N/m | 429.5 | 145 | 246 |
| Wet/Dry ratio | % | 56 | 37 | 31 |
| Average wet tensile | N/m | 541 | 208 | 331 |
|  | | | | |
| Water drop | s | 999 | 9 | 22 |
|  | | | | |
| Tear MD | cN | 141 | 128 | 163 |
| Tear CD | cN | 222 | 149 | 222 |
| Average Tear | cN | 18 | 138 | 192 |

Evolution of tensile strength of the nonwovens of Table 5 as a function of time is illustrated in Table 7.

**Table 7.** Evolution of tensile strength (N/50 mm) as a function of degradation time

|  | COMP2 | COMP3 | W2 |
|---|---|---|---|
| 0 days | 69.48 | 44.43 | 73.45 |
| 7 days | 40.48 | 40.5 | 12 |
| 14 days | 17.35 | 13 | 10.25 |
| 21 days | 13.58 | 8 | 7.58 |
| 28 days | 12.13 | 4.83 | 8.38 |
| 35 days | 10.8 | 4.03 | 7.55 |
| 42 days | 10.9 | 4.45 | 7.75 |
| 49 days | 9.78 | 3.68 | 6.75 |
| 56 days | 10.1 | 4.25 | 6.90 |
| 63 days | 11.7 | 3.05 | 6.08 |
| 70 days | 10.45 | 3.93 | 6.33 |
| 77 days | 11.20 | 3.43 | 6.58 |
| 84 days | 11.10 | 3.30 | 7.33 |
| 91 days | 10.95 | 2.95 | 5.45 |

The results show that performance of the combination of biodegradable PVOH A binder and bio-based binder (W2) is close to the synthetic binders (COMP2). This example also shows that the biobased binder alone (COMP3) is quite fully biodegraded after 35 days which is too quick.

**Example 3. Machine trial**

Machine trials have been conducted to compare productions made with the binder according to the invention and with a biobinder available on the market (Lotus grade from Organoclick). According to this example, the binder comprising at least one co-polymer containing monomer units of vinyl alcohol is PVOH A.

According to this machine trial and due to the higher speed on the paper machine, the binder composition has been cured at a temperature of above 120°C during about 7 seconds in an oven installed on the paper machine. The temperature reported corresponds to the temperature of the nonwoven sheet at the exit of the oven used for curing the binder.

The several compositions are reported below:

**Table 8.** Composition of the nonwoven sheet (wt%)

| Type | COMP4 | W3 |
|---|---|---|
| Northen softwood mechanical bleached pulp | 61 | 61 |
| Lyocell (1.4 dtex 10 mm) | 26.2 | 26.2 |
| wet strength agent | 2.8 | 2.8 |
| PVOH A | | 10 |
| Biobinder | 10 | |

**Table 9.** Physical characteristics of the nonwoven sheet

| | | COMP4 | W3 |
|---|---|---|---|
| Basis weight | g/m2 | 30.1 | 32.8 |
| Thickness | micron | 231 | 257 |
| | | | |
| Air permeability | L/m$^2$/s | 1912 | 1603 |
| | | | |
| Dry tensile MD | N/m | 987 | 1537 |
| Dry tensile CD | N/m | 550 | 807 |
| CD/MD ratio | % | 55.7 | 52.5 |
| Average tensile | N/m | 769 | 1172 |
| | | | |
| Elongation MD | % | 1.4 | 1.7 |
| Elongation CD | % | 2 | 2 |
| Average elongation | % | 1.8 | 2.1 |
| | | | |
| Wet tensile MD | N/m | 262 | 484 |
| Wet tensile CD | N/m | 163 | 229 |
| Wet/Dry ratio | % | 26.5 | 31.5 |
| Average wet tensile | N/m | 213 | 357 |
| | | | |
| Tear CD | cN | 1.38 | 1.31 |
| | | | |

**Table 10.** Evolution of the tensile strength (N/50 mm) as a function of degradation time

| | COMP4 | W3 |
|---|---|---|
| 0 days | 51.48 | 69.83 |
| 7 days | 36.58 | 33.03 |

(continued)

|  | COMP4 | W3 |
|---|---|---|
| 14 days | 8.18 | 9.55 |
| 21 days | 4.58 | 7.7 |
| 28 days | 2.35 | 8.28 |
| 35 days | 3.7 | 6.73 |
| 42 days | 1.75 | 5.73 |
| 49 days | 1.6 | 4.65 |
| 56 days | 2.25 | 4.7 |
| 63 days | 1.13 | 4.05 |
| 70 days | 0.73 | 2.40 |

According to Table 10, the machine produced samples containing the PVOH A binder (W3) exhibit a higher degradation time than the samples produced with the known biobinder (COMP4). More particularly, the samples COMP4 containing the biobinder are quite fully biodegraded after 28 days which is too quick. On the contrary, the samples produced with the PVOH A binder (W3) still offer a good integrity after 56 days. The results are illustrated also in Figure 1.

**Example 4. Further comparison between binders**

According to this example, different binder compositions have been tested on samples prepared on a lab scale. Wetlaid fibrous composition sheets were impregnated with a laboratory size-press as disclosed for Example 1 at 3.1 m/min roll speed and 1.8b roll pressure with an aqueous polymer binder formulation, dried on a contact hot dryer at 130°C for 5 minutes and cured in an oven at 160°C for 5 minutes.

**Table 11.** Compositions of the nonwoven sheets (wt%)

| Reference name | W4 | W5 | COMP5 | W6 | COMP6 |
|---|---|---|---|---|---|
| Northern Softwood Mechanical Bleached Pulp | 62.2% | 62.2% | 62.2% | 62.2% | 62.2% |
| Lyocell (1.4 dtex 10 mm) | 26.7% | 26.7% | 26.7% | 26.7% | 26.7% |
| Biobased wet strength agent | 2.9% | 2.9% | 2.9% | 2.9% | 2.9% |
| Binder | 8% | 8% | 8% | 8% | 8% |
| Reference | PVOH A | PVOH B | PVOH D | PVOH E | Starch |
| Chain length | Long (15) | Short (4) | Short (5) | Long (14) | n/a |
| Hydrolysis degree | High (99) | High (98) | Low (74) | High (99) | n/a |
| Molecular weight (g/mol) | 100,000 | 24,000 | 40,000 | 100,000 | n/a |
| Curing temp (°C) | 160 | 160 | 160 | 160 | 160 |

In table 11, the viscosities of the polymers used are reported into parentheses with the chain lengths. The mechanical properties of the several produced webs are reported in table 12 here-below.

**Table 12.** Physical characteristics of the nonwoven sheets

| Reference name | W4 | W5 | COMP5 | W6 | COMP6 |
|---|---|---|---|---|---|
| Basis weight | 27.8 | 28.2 | 28.2 | 29.6 | 30.2 |
| Dry tensile MD | 1289 | 1026 | 1172 | 1281 | 996 |
| Wet tensile MD | 408 | 142 | 122 | 498 | 142 |
| ratio Wet/dry tensile (%) | 32 | 14 | 10 | 39 | 14 |

(continued)

| Reference name | W4 | W5 | COMP5 | W6 | COMP6 |
|---|---|---|---|---|---|
|  |  |  |  |  |  |
| **Enthalpy (J/g) - first heating** | 0.73 | 1.24 | 0 | 0.90 | 0 |
| **Calculated enthalpy (J/g) of binder** | 9.12 | 15.50 | 0 | 11.25 | 0 |

The enthalpy of the binder reported here-above is calculated with the following formula:

$$\text{Enthalpy of the binder} = \text{Enthalpy of the nonwoven} / \text{percentage of binder in the nonwoven}$$

By considering W5, the enthalpy of the binder is calculated as follows:

$$0.95/0.08 = 11.88 \text{ J/g}$$

**Table 13.** Evolution of tensile strength (N/50 mm) as a function of degradation time

| Reference name | W4 | W5 | COMP5 | W6 | COMP6 |
|---|---|---|---|---|---|
| **0 days** | 72.00 | 50.23 | 72.80 | 77.93 | 54.40 |
| **7 days** | 40.18 | 36.65 | 12.90 | 29.05 | 12.03 |
| **14 days** | 18.10 | 13.93 | 4.03 | 21.90 | 4.45 |
| **21 days** | 13.20 | 9.80 | 4.38 | 12.40 | 3.45 |
| **28 days** | 8.70 | 6.45 | 2.95 | 8.60 | 2.80 |
| **35 days** | 6.83 | 5.08 | 2.40 | 3.90 | 2.20 |
| **42 days** | 5.88 | 4.25 | 1.68 | 5.05 | 1.98 |
| **49 days** | 5.63 | 3.78 | 2.18 | 5.43 | 2.53 |
| **56 days** | 4.85 | 3.43 | 2.08 | 5.05 | 1.38 |
| **63 days** | 3.63 | 3.85 | 2.20 | 3.85 | 1.93 |
| **70 days** | 4.43 | 2.33 | 0.85 | 1.90 | 1.50 |
| **77 days** | 4.43 | 2.55 | 1.48 | 2.80 | 1.38 |
| **84 days** | 3.90 | 2.68 | 1.33 | 2.93 | 1.38 |

The above examples show that long chain PVOHs with a high degree of hydrolysis (more than 80 mol%) associated with a molecular weight of more than 20,000 g/mol provide a high wet tensile strength. The wet tensile strength provided by the long chain PVOHs with a high degree of hydrolysis is higher than that obtained by short chain PVOHs with a lower degree of hydrolysis.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

INDUSTRIAL APPLICABILITY

At least some embodiments of the present invention find industrial application in organic agriculture products where biodegradability and prolonged degradation time is needed. Potential uses include for example biodegradable plant pots, such as propagation pots, flower pots, tree pots, and mulch coverings. The biodegradable nonwoven sheet may find industrial application also in food packaging applications.

CITATION LIST

Patent Literature
CN 10346801 B2
WO 2005042631 A2

**Claims**

1. A biodegradable nonwoven sheet comprising:

   - a fiber blend comprising biodegradable fibers; and
   - a binder comprising at least one co-polymer containing monomer units of vinyl alcohol, said co-polymer having a molecular weight of at least 20,000 g/mol and a degree of hydrolysis of at least 80 mol%.

2. The biodegradable nonwoven sheet according to claim 1, wherein the at least one co-polymer containing monomer units of vinyl alcohol is polyvinyl alcohol.

3. The biodegradable nonwoven sheet according to claim 1 or 2, wherein the at least one co-polymer containing monomer units of vinyl alcohol is polyethylene vinyl alcohol.

4. The biodegradable nonwoven sheet according to any one of the preceding claims, wherein the at least one co-polymer containing monomer units of vinyl alcohol has a molecular weight of 20,000 g/mol to 200,000 g/mol, preferably of 24,000 g/mol to 110,000 g/mol.

5. The biodegradable nonwoven sheet according to any one of the preceding claims, wherein the at least one co-polymer containing monomer units of vinyl alcohol has a degree of hydrolysis of at least 90 mol%, preferably of at least 95 mol%.

6. The biodegradable nonwoven sheet according to any one of the preceding claims, wherein the at least one co-polymer containing monomer units of vinyl alcohol has a viscosity of 4 mPa.s to 30 mPa.s, preferably of 5 mPa.s to 20 mPa.s

7. The biodegradable nonwoven sheet according to any one of the preceding claims, wherein the binder comprises a co-polymer containing monomer units of vinyl alcohol, said binder having an enthalpy of at least 3 J/g, preferably comprised between 8 J/g and 20 J/g, as measured based on a DSC measurement of the biodegradable nonwoven sheet.

8. The biodegradable nonwoven sheet according to any one of the preceding claims, wherein the binder is present in the biodegradable nonwoven sheet at a level of at least 5 wt%, preferably at least 6 wt%, more preferably at least 8 wt%, based on the total weight of the nonwoven sheet; and/or at a level of 35 wt% or less, preferably at a level of 30 wt% or less, more preferably at a level or 25 wt% or less, based on the total weight of the nonwoven sheet.

9. The biodegradable nonwoven sheet according to any one of the preceding claims, wherein the biodegradable fibers are selected from hardwood fibers, softwood fibers, including bleached and unbleached pulp fibers, and combinations thereof, preferably softwood pulp fibers and a combination of softwood pulp fibers and hardwood fibers; bleached and unbleached mechanical pulp, recycled pulps, man-made cellulose fibers, regenerated cellulosic fibers, and other biodegradable man-made fibers, and blend thereof.

10. The biodegradable nonwoven sheet according to the preceding claim, wherein the biodegradable nonwoven sheet comprises man-made cellulose fibers, regenerated cellulosic fibers, or other biodegradable man-made fibers in an amount of less than 50%, preferably less than 40%, more preferably less than 30% based on the total content of fibers.

11. The biodegradable nonwoven sheet according to any one of the preceding claims, wherein the biodegradable nonwoven sheet has a wet tensile in Machine Direction of at least 55 N/m, preferably of at least 100 N/m, more preferably of 150 N/m to 700 N/m; or a wet tensile in Cross Direction of at least 35 N/m, preferably of at least 55 N/m, more preferably of 110 N/m to 400 N/m.

12. The biodegradable nonwoven sheet according to any one of the preceding claims, wherein the biodegradable nonwoven sheet has a grammage of 15 to 60 g/m$^2$, preferably of 17 to 40 g/m$^2$.

13. A method of manufacturing a biodegradable nonwoven sheet according to any one of claims 1-12, comprising the following steps:

- preparing a fiber blend suspension in water comprising biodegradable fibers;
- disposing the fiber blend suspension on a forming wire of a paper or wetlaid machine;
- drying the suspension of fibers to form a fiber sheet;
- applying a binder to the fiber sheet; and
- drying and curing the fiber sheet comprising the binder to form the biodegradable nonwoven sheet;

wherein the fiber sheet comprising the binder is cured at a temperature of at least 120 °C.

14. The method according to claim 13, wherein the step of applying the binder to the fiber sheet is an impregnation step, said impregnation step being performed by size press or spray coating.

15. Use of the biodegradable nonwoven sheet of any one of claims 1 to 12 in agricultural applications.

16. Use of the biodegradable nonwoven sheet according to claim 15, wherein the biodegradable nonwoven sheet is used for forming a plant pot.

17. Use of the biodegradable nonwoven sheet according to claim 15, wherein the biodegradable nonwoven sheet is used for forming a mulch cover.

18. Use of the biodegradable nonwoven sheet of any one of claims 1 to 12 in food packaging applications.

Fig. 1

Europäisches
Patentamt

European
Patent Office

Office européen
des brevets

# EUROPEAN SEARCH REPORT

Application Number

EP 23 15 2725

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 309 469 A (VARONA EUGENIO G) 5 January 1982 (1982-01-05) * column 3, line 30 – line 32 * * column 3, line 62 – column 4, line 16 * * claim 1 * * column 6, line 47 – line 53 * ----- | 1-18 | INV. D21H17/36 A01G13/02 D21H27/10 D04H1/26 D04H1/425 D04H1/435 |
| X | US 4 124 439 A (DESSAUER GUIDO) 7 November 1978 (1978-11-07) * claims 1,9; example 1 * ----- | 1 | D04H1/64 D04H1/645 D04H1/732 |
| A | KR 101 454 576 B1 (KIM JONG GU [KR]) 28 October 2014 (2014-10-28) * claims 1-5 * ----- | 1-18 | |

TECHNICAL FIELDS
SEARCHED       (IPC)

D21H
A01G
D04H

The present search report has been drawn up for all claims

| Place of search | Date of completion of the search | Examiner |
|---|---|---|
| Munich | 3 July 2023 | Ponsaud, Philippe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................
& : member of the same patent family, corresponding
    document

EPO FORM 1503 03.82 (P04C01)

**EP 4 403 696 A1**

## ANNEX TO THE EUROPEAN SEARCH REPORT
## ON EUROPEAN PATENT APPLICATION NO.

EP 23 15 2725

03-07-2023

| Patent document cited in search report | | Publication date | Patent family member(s) | | Publication date |
|---|---|---|---|---|---|
| US 4309469 | A | 05-01-1982 | NONE | | |
| US 4124439 | A | 07-11-1978 | AT | 345660 B | 25-09-1978 |
| | | | BE | 816839 A | 27-12-1974 |
| | | | CH | 606609 A5 | 15-11-1978 |
| | | | DE | 2332294 A1 | 23-01-1975 |
| | | | ES | 427604 A1 | 16-12-1976 |
| | | | FR | 2234422 A1 | 17-01-1975 |
| | | | GB | 1471226 A | 21-04-1977 |
| | | | IT | 1023837 B | 30-05-1978 |
| | | | JP | S5031109 A | 27-03-1975 |
| | | | NL | 7408444 A | 30-12-1974 |
| | | | SE | 415044 B | 01-09-1980 |
| | | | US | 4124439 A | 07-11-1978 |
| KR 101454576 | B1 | 28-10-2014 | NONE | | |

EPO FORM P0459

**EP 4 403 696 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005042631 A2

- CN 10346801 B2